# EUROPEAN PATENT APPLICATION

(11) **EP 4 317 232 A1**
(43) Date of publication of application: **07.02.2024**
(21) Application number: 22779912.9
(22) Date of filing: 10.03.2022
(51) Int. Cl.: C08F 290/06, C08F 299/06, B33Y 80/00, C08G 18/67, C08G 18/78, C08G 18/79, B29C 64/124, B29C 64/264, B33Y 70/00

(54) **CURABLE RESIN COMPOSITION FOR STEREOLITHOGRAPHY, CURED PRODUCT, AND THREE-DIMENSIONAL OBJECT**

(30) Priority: 02.04.2021 JP 2021063260
(71) Applicant: DIC Corporation, Tokyo 174-8520 (JP)
(72) Inventor: SHIMIZU, Ikuma, Ichihara-shi, Chiba 290-8585 (JP); DEGUCHI, Yoshinobu, Ichihara-shi, Chiba 290-8585 (JP)
(74) Representative: TBK
(86) International application number: PCT/JP2022/010456
(87) International publication number: WO 2022/209689

(57) **Abstract**

The present invention provides a curable resin composition for stereolithography, which contains a urethane resin (A) having a (meth)acryloyl group and a photopolymerization initiator. The content of (meth)acryloyl group in the urethane resin (A) is 0.8 mmol/g or more and 2.2 mmol/g or less. The curable resin composition for stereolithography has low viscosity and can form a cured product excellent elastic modulus and impact resistance because of high impact strength and little change with time.

## Description

### Technical Field

The present invention relates to a curable resin composition for stereolithography, a cured product, and a three-dimensional shaped article.

### Background Art

In recent years, optical stereolithography (stereolithography) has been used as a method for producing a resin molded product, in which a three-dimensional shaped article is formed by selective polymerization curing of a curable resin composition using active energy rays, such as ultraviolet laser or the like, based on the three-dimensional shape data designed by a three-dimensional design system such as three-dimensional CAD or the like. The optical stereolithography can be applied to a complicated shape difficult to form by cutting and also has a short production time and the ease of handling, and thus it has become widely used for producing a prototype model for an industrial product in addition to a resin molded product.

A typical example of the optical stereolithography is a method in which a liquid photocurable resin contained in a vessel is irradiated from above with a spot-shaped ultraviolet laser controlled by a computer to cure a layer having a predetermined thickness, and then the liquid resin is supplied on the layer by lowing the shaped product by one layer and cured and laminated by irradiation with the same ultraviolet laser by the same method as described above, and this operation is repeated to obtain a three-dimensional shaped article. In recent, in addition to the stippling system using the spot-shaped ultraviolet laser, a surface exposure system has been increased, in which using a light source, such as LED, other than a laser, ultraviolet light is passed through a transparent vessel containing a photocurable resin and irradiated from below through a planar drawing mask called "DMD (digital micromiller device)" including a plurality of digital micromiller shutters arranged in a planar shape, thereby curing a layer pattern having a predetermined sectional shape, the shaped product is raised by one layer, and a next one layer is cured by irradiation by the same method as described above, thereby obtaining a three-dimensional shaped article by sequentially laminating layers.

Examples of the characteristics required for the photocurable resin used in the optical stereolithography include various characteristics, such as having low viscosity, being capable of forming a smooth liquid surface, and having excellent curability. A resin composition known as such a photocurable resin contains a radical polymerizable compound as a main component (for example, refer to Patent Literatures 1 and 2), but currently increasing performance required for elastic modulus and impact resistance is unsatisfactory.

Accordingly, there is required a curable resin composition for stereolithography which has low viscosity and can form a cured product having excellent elastic modulus and impact resistance.

### Citation List

### Patent Literature

PTL 1: Japanese Unexamined Patent Application Publication No. 7-228644
PTL 2: Japanese Unexamined Patent Application Publication No. 2008-189782

### Summary of Invention

### Technical Problem

An object of the present invention is to provide a curable resin composition for stereolithography, which has low viscosity and can form a cured product having excellent elastic modulus and excellent impact resistance because of high impact strength and little change with time.

### Solution to Problem

As a result of repeated earnest researches for solving the problem, the inventors found that the problem can be solved by incorporating a specific urethane (meth)acrylate, showing a specific value of the content of acryloyl group in the urethane (meth)acrylate, into a curable resin composition for stereolithography, leading to the achievement of the present invention.

That is, the present invention includes the following aspects.
[1] A curable resin composition for stereolithography, which contains a urethane resin (A) having a (meth)acryloyl group and a photopolymerization initiator, in which
   the content of (meth)acryloyl group in the urethane resin (A) is 0.8 mmol/g or more and 2.2 mmol/g or less.
[2] The curable resin composition for stereolithography described in [1], in which the urethane resin (A) is produced by using, as essential reaction raw materials, at least one polyisocyanate (a1) represented by any one of formulae (1), (2), and (3) below, and a compound (a2) having a hydroxyl group and a (meth)acryloyl group. 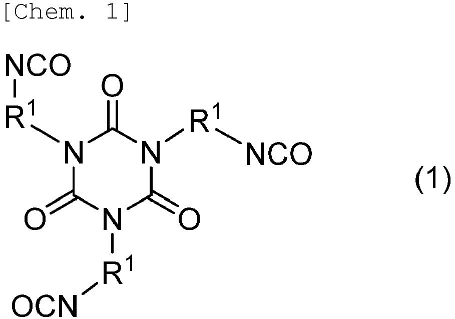 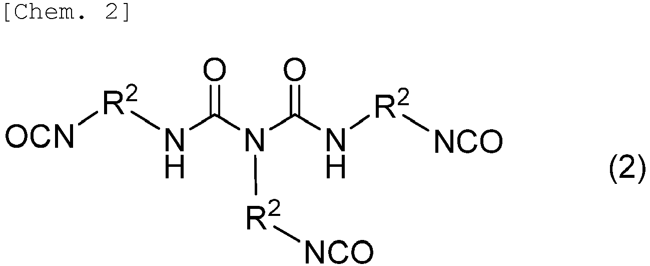 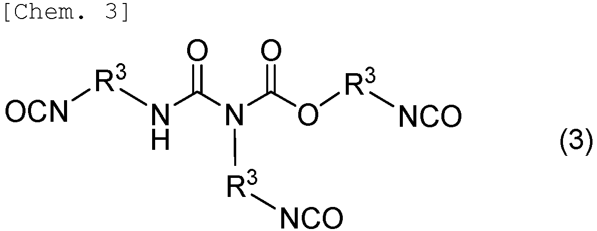 (In the formulae (1), (2), and (3), R¹, R², and R³ each represent a hydrocarbon group having 1 to 20 carbon atoms, which may have a substituent.)
[3] The curable resin composition for stereolithography described in [2], in which R¹, R², and R³ in the formulae (1), (2), and (3) each represent a linear alkyl group.
[4] The curable resin composition for stereolithography described in [2] or [3], in which the urethane resin (A) is produced by using, as essential reaction raw materials, at least one polyisocyanate (a1) represented by any one of the formulae (1), (2), and (3), and a compound (a2) represented by formula (4) below having a hydroxyl group and a (meth)acryloyl group. 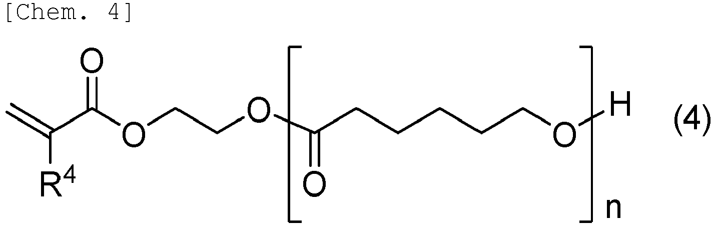 (In the formula (4), R⁴ represents a hydrogen atom or a methyl group, and n represents an integer of 0 or more and 10 or less.)
[5] The curable resin composition for stereolithography described in any one of [1] to [4], containing a monofunctional (meth)acrylic compound (B1) and/or a difunctional (meth)acrylic compound (B2), in which
   the content of the urethane resin (A) in the curable resin composition for stereolithography is 1% by mass or more and 50% by mass or less.
[6] The curable resin composition for stereolithography described in [5], in which the glass transition temperature of a polymer of the monofunctional (meth)acrylic compound (B1) is 50°C or more.
[7] The curable resin composition for stereolithography described in [5], in which the glass transition temperature of a polymer of the difunctional (meth)acrylic compound (B2) is 40°C or more.
[8] The curable resin composition for stereolithography described in [5] or [6], in which the monofunctional (meth)acrylic compound (B1) is represented by formula (5) below. 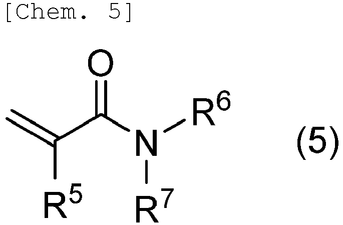 (In the formula (5), R³ represents a hydrogen atom or a methyl group, R⁶ and R⁷ are each independently a monovalent hydrocarbon group having 1 to 40 carbon atoms which may have a ring structure, a group in which the carbon atoms in the hydrocarbon group are partially substituted by oxygen atoms or nitrogen atoms, or a hydrogen atom, R⁶ and R⁷ may be bonded to each other to form a ring, and a monovalent hydrocarbon group having 1 to 40 carbon atoms represented by each of R⁶ and R⁷ may or may not contain an unsaturated double bond.)
[9] A cured product including a curing reaction product of the curable resin composition for stereolithography described in any one of [1] to [8].
[10] The cured product described in [9], in which a curing condition is irradiation with active energy rays.
[11] A three-dimensional shaped article including the cured product described in [9] or [10].

### Advantageous Effects of Invention

The present invention can provide a curable resin composition for stereolithography, which has low viscosity and can form a cured product having excellent elastic modulus and excellent impact resistance because of high impact strength and little change with time.

### Description of Embodiments

The present invention is described in detail below. The description of components described below is illustrative for describing the present invention, and the present invention is not limited to these contents.

In the present specification, "(meth)acrylate" represents acrylate and/or methacrylate. In addition, "(meth)acryloyl" represents acryloyl and/or methacryloyl. Further, "(meth)acryl" represents acryl and/or methacryl.

### (Curable resin composition for stereolithography)

A curable resin composition for stereolithography of the present invention contains a urethane resin (A), having a (meth)acryloyl group, and a photopolymerization initiator. The content of (meth)acryloyl group in the urethane resin (A) is 0.8 mmol/g or more and 2.2 mmol/g or less.

The curable resin composition for stereolithography of the present invention can contain a monofunctional (meth)acrylic compound (B1) and/or a difunctional (meth)acrylic compound (B2) in addition to the urethane resin (A) having a (meth)acryloyl group and the photopolymerization initiator.

Also, the curable resin composition for stereolithography of the present invention can contain another tri- or higher-functional (meth)acrylic compound other than the monofunctional (meth)acrylic compound (B1) and/or the difunctional (meth)acrylic compound (B2) within a range not impairing the effect of the present invention.

Further, if required, the curable resin composition for stereolithography of the present invention can also contain other additives such as a photosensitizer, an ultraviolet absorber, a polymerization inhibitor, an inorganic filler, etc.

### <Urethane resin (A) having (meth)acryloyl group>

In the urethane resin (A) used in the present invention, the content of (meth)acryloyl group in the urethane resin (A) is 0.8 mmol/g or more and 2.2 mmol/g or less.

When the curable resin composition contains the urethane resin (A) having a specific value of the content of (meth)acryloyl group, the curable resin composition has low viscosity and can form a cured product excellent elastic modulus and impact resistance as shown in examples described below.

The urethane resin (A) can be obtained by reacting polyisocyanate (a1) with a compound (a2) having a hydroxyl group and a (meth)acryloyl group.

### <<Polyisocyanate (a1)>>

The polyisocyanate (a1) is not particularly limited as long as the urethane resin (A) used in the present invention, which has a specific value of the content of (meth)acryloyl group, can be formed, and it can be properly selected according to purposes. Examples thereof include aliphatic diisocyanate compounds such as butane diisocyanate, hexamethylene diisocyanate, 2,2,4-trimethylhexamethylenne diisocyanate, 2,4,4,-trimethylhexamethylene diisocyanate, and the like; alicyclic diisocyanate compounds such as norbornane diisocyanate, isophorone diisocyanate, hydrogenated xylylene diisocyanate, hydrogenated diphenylmethane diisocyanate, and the like; aromatic diisocyanate compounds such as tolylene diisocyanate, xylylene diisocyanate, tetramethylxylylene diisocyanate, diphenylmethane diisocyanate, 1,5-naphthalene diisocyanate, 4,4'-diisocyanato-3,3'-dimethylbiphenyl, o-tolidine diisocyanate, and the like; polymethylene polyphenyl polyisocyanate having a repeating structure represented by formula (6) below; isocyanurate-modified products, biuret-modified products, and allophanate-modified products of these; and the like. 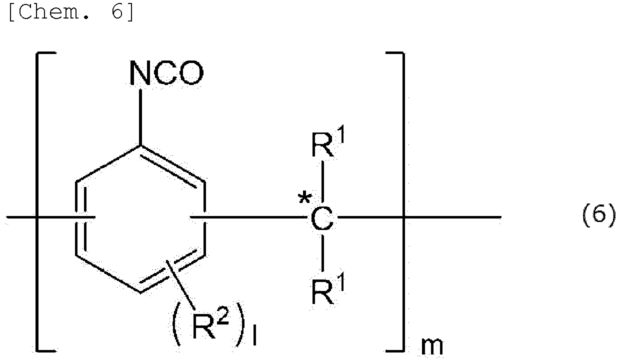 (In the formula (6), R¹s are each independently any one of a hydrogen atom and a hydrocarbon group having 1 to 6 carbon atoms. R²s are each independently any one of an alkyl group having 1 to 4 carbon atoms and a bonding point linked to a structure part represented by the formula (6) through a methylene group marked with *. 1 is 0 or an integer of 1 to 3, and m is an integer of 1 to 15.)

In particular, the polyisocyanate (a1) is more preferably at least one polyisocyanate represented by any one of formulae (1), (2), and (3) below in forming the urethane resin (A) having the content of (meth)acryloyl group which shows a specific value specified in the present invention.

A preferred embodiment for the polyisocyanate (a1) is, for example, <<<First embodiment>>> described below.

### <<<First embodiment>>>

The polyisocyanate (a1) is more preferably at least one polyisocyanate represented by any one of formulae (1), (2), and (3) below.

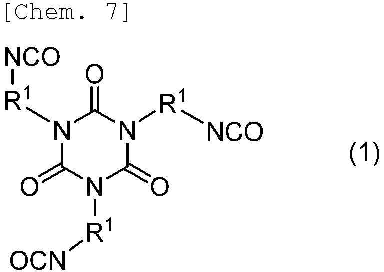

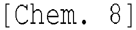

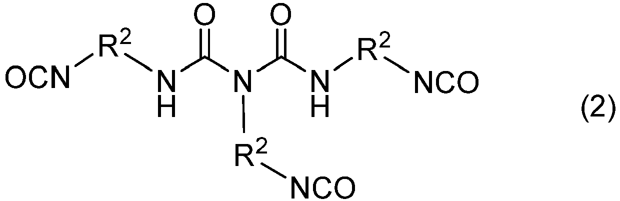

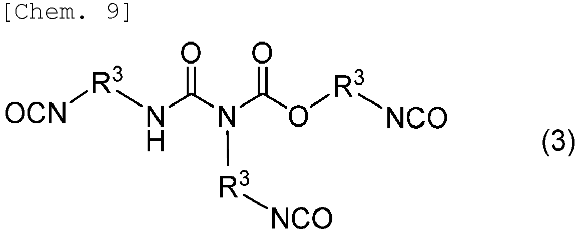

In the formulae (1), (2), and (3), R¹, R², and R³ each represent a hydrocarbon group having 1 to 20 carbon atoms, which may have a substituent.

A polyisocyanate having an isocyanurate structure, a biuret structure, or an allophanate structure as shown in the formulae (1) to (3) is more preferably used as the polyisocyanate (a1).

In the formulae (1), (2), and (3), R¹, R², and R³ are each more preferably a linear alkyl group.

The polyisocyanates (a1) described above can be used alone or in combination of two or more.

### <<Compound (a2) having hydroxyl group and (meth)acryloyl group>>

The compound (a2) having a hydroxyl group and a (meth)acryloyl group is not particularly limited as long as the urethane resin (A) used in the present invention, which has a specific value of content of (meth)acryloyl group, can be formed, and it can be properly selected according to purposes. Examples thereof include hydroxyethyl (meth)acrylate, hydroxypropyl (meth)acrylate, trimethylolpropane (meth)acrylate, trimethylolpropane di(meth)acrylate, pentaerythritol (meth)acrylate, pentaerythritol di(meth)acrylate, pentaerythritol tri(meth)acrylate, dipentaerythritol (meth)acrylate, dipentaerythritol di(meth)acrylate, dipentaerythritol tri(meth)acrylate, dipentaerythritol tetra(meth)acrylate, dipentaerythritol penta(meth)acrylate, ditrimethylolpropane (meth)acrylate, ditrimethylolpropane di(meth)acrylate, ditrimethylolpropane tri(meth)acrylate, and the like. Other usable examples include (poly)oxyalkylene modified products produced by introducing a (poly)oxyalkylene chain, such as a (poly)oxyethylene chain, a (poly)oxypropylene chain, a (poly)oxytetramethylene chain, or the like, into the molecular structures of the various compounds each having a hydroxyl group and a (meth)acryloyl group; lactone modified products produced by introducing a (poly)lactone structure into the molecular structures of the various compounds each having a hydroxyl group and a (meth)acryloyl group; and the like.

The compound (a2) having a hydroxyl group and a (meth)acryloyl group is more preferably a compound having a hydroxyl group and a (meth)acryloyl group presented by formula (4) below in order to form the urethane resin (A) having the content of (meth)acryloyl group which shows a specific value specified in the present invention.

A preferred embodiment for the compound (a2) having a hydroxyl group and a (meth)acryloyl group is, for example,

### <<<Second embodiment>>> described below.

### <<<Second embodiment>>>

The compound (a2) having a hydroxyl group and a (meth)acryloyl group is more preferably a compound having a hydroxyl group and a (meth)acryloyl group presented by formula (4) below.

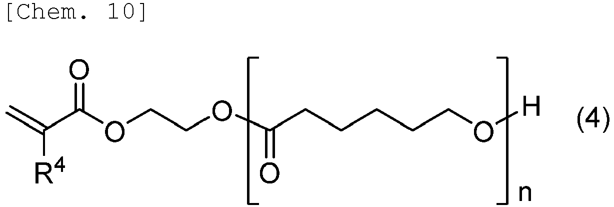

In the formula (4), R⁴ represents a hydrogen atom or a methyl group, and n represents an integer of 0 or more and 10 or less.

A hydroxyl group-containing (meth)acrylate modified with caprolactone as shown in the formula (4) is preferably used as the compound (a2) having a hydroxyl group and a (meth)acryloyl group.

The compounds (a2) having a hydroxyl group and a (meth)acryloyl group described above can be used alone or in combination of two or more.

### <<Method for producing urethane resin (A)>>

A method for producing the urethane resin (A) is not particularly limited, and any production method may be used. For example, the urethane resin (A) may be produced by a method of reacting, at a time, the reaction raw materials containing the polyisocyanate (a1) and the compound (a2) having hydroxyl group and a (meth)acryloyl group, or may be produced by a method of diving and sequentially reacting the reaction raw materials. Because the curable resin composition having low viscosity and being capable of forming a cured product having excellent elastic modulus and impact resistance can be obtained, the equivalent ratio (OH/NCO) of hydroxyl group (OH) possessed by the compound (a2) having a hydroxyl group and a (meth)acryloyl group to the isocyanate group (NCO) possessed by the polyisocyanate (a1) is preferably within a range of 0.95/1.00 to 1.05/1.00 and more preferably 1/1.

For example, dibutyltin laurate, dibutyltin acetate, or the like can be used as a catalyst for producing the urethane resin (A), and the conditions for usual urethanization reaction can be used for producing it. If required, there can be also used a solvent such as ethyl acetate, butyl acetate, methyl isobutyl ketone, toluene, xylene, or the like, or a solvent such as a radical polymerizable monomer not containing a hydroxyl group or an amino group, among those not containing a site reactive with isocyanate.

### <<Characteristics of urethane resin (A)>>

The content of (meth)acryloyl group in the urethane resin (A) is the amount (mmol/g) per unit mass of the urethane resin (A).

The content of (meth)acryloyl group in the urethane resin (A) shows 0.8 mmol/g or more and 2.2 mmol/g or less, but from the viewpoint of satisfying both the hardness and impact resistance of a cured product, the content is more preferably 1.0 mmol/g or more and still more preferably 1.2 mmol/g or more, and is more preferably 2.0 mmol/g or less and still more preferably 1.9 mmol/g or less.

The content of (meth)acryloyl group in the urethane resin (A) can be determined by, for example, a method of attributing each of the peaks of a measurement sample to an internal standard using a ¹HNMR analyzer and determining from the integral ratio thereof, a method of quantitatively determining using a calibration curve formed from a peak caused by acryloyl group and a specific peak of a standard substance using an IR analyzer, or the like. In the present application, the content of (meth)acryloyl group of the urethane resin (A) is calculated based on the content (theoretical value) of (meth)acryloyl group of the raw material.

### <Photopolymerization initiator>

The curable resin composition for stereolithography of the present invention further contains the photopolymerization initiator. Examples of the photopolymerization initiator include 1-hydroxycyclohexyl phenyl ketone, 2-hydroxy-2-methyl-1-phenylpropan-1-one, 1-[4-(2-hydroxyethoxy)phenyl]-2-hydroxy-2-methyl-1-propan-1-one, thioxanthone and thioxanthone derivatives, 2,2'-dimethoxy-1,2-diphenylethan-1-one, diphenyl(2,4,6-trimethoxybenzoyl)phosphine oxide, 2,4,6-trimethylbenzoyldiphenyl phosphine oxide, bis(2,4,6-trimethylbenzoyl)phenylphosphine oxide, 2-methyl-1-(4-methylthiophenyl)-2-morpholinopropan-1-one, 2-benzyl-2-dimethylamino-1-(4-morpholinophenyl)-1-butanone, ethyl phenyl(2,4,6-trimethylbenzoyl)phosphinate, polymeric TPO-L, and the like.

Examples of other commercial products of the photopolymerization initiator include "Omnirad-1173", "Omnirad-184", "Omnirad-127", "Omnirad-2959", "Omnirad-369", "Omnirad-379", "Omnirad-907", "Omnirad-4265", "Omnirad-1000", "Omnirad-651", "Omnirad-TPO", "Omnirad-819", "Omnirad-2022", "Omnirad-2100", "Omnirad-2959", "Omnirad-754", "Omnirad-784", "Omnirad-500", "Omnirad-81", "Omnirad TPO-L", and "Omnipol TP" (manufactured by IGM Inc.), "Kayacure-DETX", "Kayacure-MBP", "Kayacure-DMBI", "Kayacure-EPA", and "Kayacure-OA" (manufactured by Nippon Kayaku Co., Ltd.), "Baicure-10" and "Bsirue-55" (manufactured by Stauffer Chemical Company), "Trigonal P1" (manufactured by Akzo Co., Ltd.), "Sandoray 1000" (manufactured by Sandoz Inc.), "Deep" (manufactured by Upjohn Inc.), "Quantacure-PDO", "Quantacure-ITX", and "Quantacure-EPD" (manufactured by Ward Blenkinsop Co., Ltd.), "Runtecure-1104" (manufactured by Runtec Corporation), and the like.

The amount of the photopolymerization initiator added is, for example, preferably used in an amount within a range of 1 to 20% by mass in the curable resin composition for stereolithography.

### <Monofunctional (meth)acrylic compound (B1)>

A nitrogen-containing (meth)acrylic compound can also be contained as the (meth)acrylic compound.

Examples of the (meth)acrylic compound include (meth)acrylic compounds such as a (meth)acrylate compound, (meth)acrylamides, and the like.

Examples of the monofunctional (meth)acrylic compound (B1) include monofunctional (meth)acrylate compounds such as phenoxyethyl (meth)acrylate, phenoxybenzyl (meth)acrylate, cyclohexyl (meth)acrylate, trimethylcyclohexyl (meth)acrylate, cyclohexylmethyl (meth)acrylate, cyclohexylethyl (meth)acrylate, 2-ethylhexyl (meth)acrylate, dipropylene glycol mono(meth)acrylate, isobornyl (meth)acrylate, norbornyl (meth)acrylate, isononyl (meth)acrylate, benzyl (meth)acrylate, phenylbenzyl (meth)acrylate, lauryl (meth)acrylate, tetrahydrofurfuryl (meth)acrylate, ethoxyethoxyethyl (meth)acrylate, 2-(meth)acryloyloxyethyl succinate, methyl (meth)acrylate, ethyl (meth)acrylate, n-butyl (meth)acrylate, n-pentyl (meth)acrylate, n-hexyl (meth)acrylate, isobutyl (meth)acrylate, tert-butyl (meth)acrylate, n-octyl (meth)acrylate, isooctyl (meth)acrylate, 2-ethylmethoxy (meth)acrylate, 2-ethylethoxy (meth)acrylate, 2-ethylbutoxy (meth)acrylate, n-decyl (meth)acrylate, isodecyl (meth)acrylate, lauryl (meth)acrylate, butoxydiethylene glycol (meth)acrylate, butoxytriethylene glycol (meth)acrylate, methoxydiethylene glycol (meth)acrylate, methoxytriethylene glycol (meth)acrylate, methoxypolyethylene glycol (meth)acrylate, 2-hydroxyethyl (meth)acrylate, 2-hydroxypropyl (meth)acrylate, 4-hydroxybutyl (meth)acrylate, dimethylaminoethyl (meth)acrylate, diethylaminoethyl (meth)acrylate, (meth)acryloyl morpholine, 2-(meth)acryloyloxyethyl succinate, 2-(meth)acryloyloxyethyl hexahydrophthalate, glycidyl (meth)acrylate, 2-hydroxy-3-phenoxypropyl (meth)acrylate, dicyclopentenyl (meth)acrylate, dicyclopentenyloxyethyl (meth)acrylate, dicyclopentanyl (meth)acrylate, dicyclopentanyloxyethyl (meth)acrylate, pentamethylpiperidinyl (meth)acrylate, tetramethylpiperidinyl (meth)acrylate, (2-methyl-2-ethyl-1, 3-dioxoran-4-yl)methyl (meth)acrylate, 3, 4-eoxycyclohexylmethyl methacrylate, cyclic trimethylolpropane formal (meth)acrylate, 1-adamantyl (meth)acrylate, 2-adamantyl (meth)acrylate, 2-methyl-2-adamantyl (meth)acrylate, glycerin carbonate (meth)acrylate, tert-butylcyclohexyl (meth)acrylate, 2-(1,2-cyclohexane dicarboxyimide)ethyl (meth)acrylate, o-phenylphenoxyethyl (meth)acrylate, phenoxyethyl (meth)acrylate, and the like.

The monofunctional (meth)acrylic compounds can be used alone or in combination of two or more.

Among the monofunctional (meth)acrylic compounds, monofunctional (meth)acrylic compounds whose polymers have a glass transition temperature (abbreviated as "Tg" hereinafter) of 50°C or more are preferred because a curable resin composition having low viscosity and capable of forming a cured product having excellent mechanical properties can be obtained. In particular, (meth)acrylic compounds having a cyclic structure such as a condensed polycyclic structure, a heterocyclic structure, or the like are preferred, and isobornyl acrylate (Tg: 94°C), isobornyl methacrylate (Tg: 180°C), dicyclopentenyl acrylate (Tg: 120°C), dicyclopentanyl acrylate (Tg: 120°C), and dicyclopentanyl methacrylate (Tg: 175°C) are more preferred.

When two or more monofunctional (meth)acrylic compounds (B1) are used, a copolymer of the two or more monofunctional (meth)acrylic compounds preferably has a Tg of 50°C or more.

Also, a nitrogen-containing (meth)acrylic compound can be contained as the (meth)acrylic compound (B1), and (meth)acrylamide represented by formula (5) below is more preferred from the viewpoint of the adhesion of a cured product to a shaping stage. 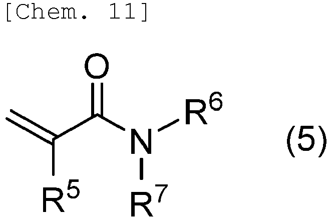 In the formula (5), R³ represents a hydrogen atom or a methyl group. R⁶ and R⁷ each independently represent a monovalent hydrocarbon group having 1 to 40 carbon atoms, which may have a cyclic structure, a group in which the carbon atoms of the hydrocarbon group are partially substituted by an oxygen atom or a nitrogen atom, or a hydrogen atom, R⁶ and R⁷ may be bonded to each other to form a ring, and a monovalent hydrocarbon group having 1 to 40 carbon atoms and represented by each of R⁶ and R⁷ may or may not contain an unsaturated double bond.

Examples of a monofunctional (meth)acrylamide compound represented by the formula (5) include scryloylmorpholine, isopropylacrylamide, dimethylacrylamide, hydroxyethylacrylamide, and diethylacrylamide. Among these, (meth)acrylamide compounds having a cyclic structure, such as a condensed polycyclic structure, a heterocyclic structure or the like, are preferred, and acryloylmorpholine (Tg: 145°C) is particularly preferred.

### <Difunctional (meth)acrylic compound (B2)>

Examples of the difunctional (meth)acrylic compound include difunctional (meth)acrylate compounds.

More specific examples of the difunctional (meth)acrylic compound (B2) include difunctional (meth)acrylate compounds such as 1,6-hexanediol di(meth)acrylate, 1,4-butanediol di(meth)acrylate, 1,3-butylene glycol di(meth)acrylate, 1,9-nonanediol di(meth)acrylate, 1,10-decanediol di(meth)acrylate, neopentyl glycol di(meth)acrylate, ethylene oxide-modified 1,6-hexanediol di(meth)acrylate, hydroxypyvalic acid neopentyl glycol di(meth)acrylate, propylene oxide-modified pentyl glycol di(meth)acrylate, tripropylene glycol di(meth)acrylate, dipropylene glycol di(meth)acrylate, triethylene glycol di(meth)acrylate, bisphenol A ethylene oxide-modified di(meth)acrylate, bisphenol A propylene oxide-modified di(meth)acrylate, bisphenol F ethylene oxide-modified di(meth)acrylate, tricyclodecane dimethanol di(meth)acrylate, tetraethylene glycol di(meth)acrylate, polyethylene glycol di(meth)acrylate, polypropylene glycol di(meth)acrylate, glycerin propylene oxide-modified tri(meth)acrylate, 2-hydroxy-3-acryloyloxypropyl (meth)acrylate, bisphenoxyethanol fluorene ethylene oxide-modified di(meth)acrylate, polytetramethylene glycol di(meth)acrylate, ethoxylated isocyanurate tri(meth)acrylate, phenoxyethylene glycol (meth)acrylate, stearyl (meth)acrylate, 2-(meth)acryloyloxyethyl succinate, trifluoroethyl (meth)acrylate, 3-methyl-1,5-pentanediol di(meth)acrylate, 2,3-[(meth)acryloyloxymethyl]norbornane, 2,5-[(meth)acryloyloxymethyl]norbornane, 2,6-[(meth)acryloyloxymethyl]norbornane, 1,3-adamantyl di(meth)acrylate, 1,3-bis[(meth)acryloyloxymethyl]adamantane, tris(hydroxyethyl)isocyanuric acid di(meth)acrylate, 3,9-bis[1,1-dimethyl-2-(meth)acryloyloxyethyl]-2,4,8,10-tetraoxospiro[5.5]undecane, and the like.

These difunctional (meth)acrylic compounds can be used alone or in combination of two or more.

Among the difunctional (meth)acrylic compounds, difunctional (meth)acrylic compounds whose polymers have a Tg of 40°C or more are preferred because a curable resin composition having low viscosity and capable of forming a cured product having excellent mechanical properties can be obtained. In particular, dipropylene glycol diacrylate (Tg: 102°C), tricyclodecanedimethanol diacrylate (Tg: 110°C), and hydroxypivalic acid neopentyl glycol diacrylate (Tg: 111°C) are more preferred.

When two or more difunctional (meth)acrylic compounds (B2) are used in combination, a copolymer of the two or more difunctional (meth)acrylic compounds preferably has a Tg of 40°C or more.

Also, the monofunctional (meth)acrylic compound (B1) can be used in combination with the difunctional (meth)acrylic compound (B2). In this case, a copolymer of the (meth)acrylic compounds used in combination preferably has a Tg of 40°C or more.

### <Other (meth)acrylic compound>

If required, the curable resin composition for stereolithography of the present invention can further contain a tri- or higher-functional (meth)acrylic compound used in combination other than the monofunctional (meth)acrylic compound (B1) and/or the difunctional (meth)acrylic compound (B2). Also in this case, a copolymer of the (meth)acrylic compounds used in combination preferably has a Tg of 40°C or more.

Examples of the tri- or higher-functional (meth)acrylic compound include trifunctional (meth)acrylates such as EO-modified glycerol acrylate, PO-modified glycerol triacrylate, pentaerythritol triacrylate, EO-modified phosphoric acid triacrylate, trimethylolpropane triacrylate, caprolactone-modified trimethylolpropane triacrylate, HPA-modified trimethylolpropane triacrylate, (EO)- or (PO)-modified trimethylolpropane triacrylate, alkyl-modified dipentaerythritol triacrylate, tris(acryloxyethyl) isocyanurate, and the like;
tetrafunctional (meth)acrylates such as ditrimethylolpropane tetraacrylate, pentaerythritol ethoxy tetraacrylate, pentaerythritol tetraacrylate, and the like;
pentafunctional (meth)acrylates such as dipentaerythritol hydroxy pentaacrylate, alkyl-modified dipentaerythritol pentaacrylate, and the like; and
hexafunctional (meth)acrylates such as dipentaerythritol hexaacrylate and the like. These tri- or higher-functional (meth)acrylic compounds (more specifically, (meth)acrylates) can be used alone or in combination of two or more.

### <Other additive>

If required, the curable resin composition for stereolithography of the present invention can also contain various additives such as a photosensitizer, an ultraviolet absorber, an antioxidant, a polymerization inhibitor, a silicon-based additive, a fluorine-based additive, a silane coupling agent, a phosphate ester compound, organic beads, inorganic fine particles, an organic filler, an inorganic filler, a rheology control agent, a defoaming agent, a colorant, and the like.

If required, curability can be improved by further adding a photosensitizer to the curable resin composition for stereolithography of the present invention.

Examples of the photosensitizer include amine compounds such as aliphatic amine, aromatic amine, and the like; urea compound such as o-tolylthiourea and the like; condensed polycyclic compounds such as an anthraquinone derivative and the like; sulfur compounds such as sodium diethyldithiophosphate, s-benzyl isothiouronium-p-toluene sulfonate, and the like; and the like.

Examples of the ultraviolet absorber include triazine derivatives such as 2-[4-{(2-hydroxy-3-dodecyloxypropyl)oxy}-2-hydroxyphenyl]-4,6-bis(2,4-dimethylphenyl)-1,3,5-triazine, 2-[4-{(2-hyroxy-3-tridecyloxypropyl)oxy}-2-hydroxyphenyl]-4,6-bis(2,4-dimethylphenyl)-1,3,5-triazine, and the like; 2-(2'-xanthenecarboxy-5'-methylphenyl)benzotriazole, 2-(2'-o-nitrobenzyloxy-5'-methylphenyl)benzotriazole, 2-xanthenecarboxy-4-dodecyloxybenzophenone, 2-o-nitrobenzyloxy-4-dedecyloxybenzophenone, and the like. These ultraviolet absorbers can be used alone or in combination of two or more.

Examples of the antioxidant include a hindered phenol-based antioxidant, a hindered amine-based antioxidant, an organic sulfur-based antioxidant, a phosphate ester-based antioxidant, and the like. These antioxidants can be used alone or in combination of two or more.

Examples of the polymerization inhibitor include hydroquinone, methoquinone, di-tert-butylhydroquinone, P-methoxyphenol, butylhydroxytoluene, a nitrosoamine salt, and the like.

Examples of the silicon-based additive include polyorganosiloxane having an alkyl group or a phenyl group, such as dimethyl polysiloxane, methylphenyl polysiloxane, cyclic dimethyl polysiloxane, methyl hydrogen polysiloxane, polyether-modified dimethyl polysiloxane copolymer, polyester-modified dimethyl polysiloxane copolymer, fluorine-modified dimethyl polysiloxane copolymer, amino-modified dimethyl polysiloxane copolymer, and the like; polydimethylsiloxane having a polyether-modified acryl group; polydimethylsiloxane having a polyester-modified acryl group; and the like. These silicon-based additives can be used alone or in combination of two or more.

Examples of the fluorine-based additive include "Megaface" series manufactured by DIC corporation, and the like. These fluorine-based additives can be used alone or in combination of two or more.

Examples of the silane coupling agent include vinyl-based silane coupling agents such as vinyl trichlorosilane, vinyl trimethoxysilane, vinyl triethoxysilane, 2-(3,4-epoxycyclohexyl)ethyl trimethoxysilane, 3-glycidoxypropyl trimethoxysilane, 3-glycidoxypropylmethy diethoxysilane, 3-glycidoxypropyl triethoxysilane, p-styryl trimethoxysilane, 3-methacryloxypropyl methyl dimethoxysilane, 3-methacryloxypropyl trimethoxysilane, 3-methacryloxypropylmethyl diethoxysilane, 3-methacryloxypropyl triethoxysilane, 3-acryloxypropyl trimethoxysilane, N-2-(aminoethyl)-3-aminopropylmethyl dimethoxysilane, N-2-(aminoethyl)-3-aminopropyl trimethoxysilane, N-2-(aminoethyl)-3-aminopropyl triethoxysilane, 3-aminopropyl trimethoxysilane, 3-aminopropyl triethoxysilane, 3-triethoxysilyl-N-(1,3-dimethyl-butylidene)propylamine, N-phenyl-3-aminopropyl trimethoxysilane, hydrochloride of N-(vinylbenzyl)-2-aminoethyl-3-aminoproppyl trimethoxysilane, special aminosilane, 3-ureidopropyl triethoxysilane, 3-chloropropyl trimethoxysilane, 3-mercaptopropylmethyl dimethoxysilane, 3-mercaptopropyl trimethoxysilane, bis(triethoxysilylpropyl) tetrasulfide, 3-isocyanatopropyl triethoxysilane, allyl trichlorosilane, allyl triethoxysilane, allyl trimethoxysilane, diethoxymethyl vinylsilane, vinyl trimethoxysilane, vinyl triethoxysilane, vinyl tris(2-methoxyethoxy)silane, and the like;
epoxy-bases silane coupling agents such as diethoxy(glycidyloxypropyl)methyl silane, 2-(3, 4-epoxycyclohexyl)ethyl trimethoxysilane, 3-glycidoxypropyl trimethoxysilane, 3-glycidoxypropylmethyl diethoxysilane, 3-glycidoxypropyl triethoxysilane, and the like;
styrene-based silane coupling agents such as p-styryl trimethoxysilane and the like;
(meth)acryloxy-based silane coupling agents such as 3-methacryloxypropylmethyl dimethoxysilane, 3-acryloxypropyl trimethoxysilane, 3-methacryloxypropyl trimethoxysilane, 3-methacryloxypropylmethyl diethoxysilane, 3-methacryloxypropyl triethoxysilane, and the like;
amino-based silane coupling agents such as N-2(aminoethyl) 3-aminopropylmethyl dimethoxysilane, N-2(aminoethyl) 3-aminopropyl trimethoxysilane, N-2(aminoethyl) 3-aminopropyl triethoxysilane, 3-aminopropyl trimethoxysilane, 3-aminopropyl triethoxysilane, 3-triethoxysilyl-N-(1,3-dimethyl-butylidene)propylamine, N-phenyl-3-aminopropyl trimethoxysilane, and the like;
ureido-based silane coupling agents such as 3-urelidopropyl triethoxysilane and the like;
chloropropyl-based silane coupling agents such as 3-chloropropyl trimethoxysilane and the like;
mercapto-based silane coupling agents such as 3-mercaptopropylmethyl dimethoxysilane, 3-mercaptopropyl trimethoxysilane, and the like;
sulfide-based silane coupling agents such as bis(triethoxysilylpropyl) tetrasulfide and the like;
isocyanate-based silane coupling agents such as 3-isocyanatopropyl triethoxysilane and the like; and the like. These silane coupling agents can be used alone or in combination of two or more.

The phosphate ester compound is, for example, a compound having a (meth)acryloyl group in its molecular structure, and examples of a commercial product thereof include "KAYAMER PM-2" and "KAYAMER PM-21" manufactured by Nippon Kayaku Co., Ltd., "Light Ester P-1M", "Light Ester P-2M", and "Light Acrylate P-1A(N)" manufactured by Kyoeisha Chemical Co., Ltd., "SIPOMER PAM 100", "SIPOMER PAM 200", "SIPOMER PAM 300", "SIPOMER PAM 4000" manufactured by SOLVAY Co., Ltd., "Viscoat #3PA" and "Viscoat #3PMA" manufactured by Osaka Organic Chemical Industry Ltd., "New Frontier S-23A" manufactured by Daiichi Kogyo Seiyaku Co., Ltd., "SIPOMER PAM 5000" manufactured by SOLVAY Co., Ltd., which is a phosphate ester compound having an allyl ether group in its molecular structure, and the like.

Examples of the organic beads include polymethyl methacrylate beads, polycarbonate beads, polystyrene beads, polyacrylstyrene beads, silicone beads, glass beads, acryl beads, benzoguanamine-based resin beads, melamine-based resin beads, polyolefin-based resin beads, polyester-based resin beads, polyamide resin beads, polyimide-based resin beads, polyethylene fluoride resin beads, polyethylene resin beads, and the like. These types of organic beads can be used alone or in combination of two or more. In addition, the average particle diameter of the organic beads is preferably within a range of 1 to 10 µm.

Examples of the inorganic fine particles include fine particles of silica, alumina, zirconia, titania, barium titanate, antimony trioxide, and the like. These types of inorganic fine particles can be used alone or in combination of two or more. In addition, the average particle diameter of the inorganic fine particles is preferably within a range of 95 to 250 nm, and particularly preferably within a range of 100 to 180 nm.

When the inorganic fine particles are contained, a dispersion auxiliary agent can be used.

Examples of the dispersion auxiliary agent include phosphate ester compounds such as isopropyl acid phosphate, triisodecylphosphite, ethylene oxide-modified phosphoric acid dimethacrylate, and the like. These dispersion auxiliary agents can be used alone or in combination of two or more.

In addition, examples of a commercial product of the dispersion auxiliary agent include "KAYAMER PM-21" and "KAYAMER PM-2" manufactured by Nippon Kayaku Co., Ltd., "Light Ester P-2M" manufactured by Kyoeisha Chemical Co., Ltd., and the like.

Examples of the organic filler include plant-derived solvent-insoluble materials such as cellulose, lignin, cellulose nanofibers, and the like.

Examples of the inorganic filler include glass (particles), silica (particles), alumina silicate, talc, mica, aluminum hydroxide, alumina, calcium carbonate, carbon nanotubes, and the like.

Examples of the rheology control agent include amide waxes such as "Disparlon 6900" manufactured by Kusumoto Chemicals, Ltd.; urea-based rheology control agents such as "BYK410" manufactured by BYK Chemie Co., Ltd. and the like; polyethylene wax such as "Disparlon 4200" manufactured by Kusumoto Chemicals, Ltd. and the like; cellulose-acetate-butyrate such as "CAB-381-2" and "CAB 32101" manufactured by Eastman Chemical Products, Inc., and the like; and the like.

Examples of the defoaming agent include an oligomer containing a fluorine or silicon atom, oligomers such as higher fatty acids, acrylic polymer, and the like, and the like.

Examples of the coloring agent include a pigment, a dye, and the like.

Commonly-used inorganic pigment and organic pigment can be used as the pigment.

Examples of the inorganic pigment include titanium oxide, antimony red, Bengal, cadmium red, cadmium yellow, cobalt blue, Prussian blue, ultramarine blue, carbon black, graphite, and the like.

Examples of the organic pigment include a quinacridone pigment, a quinacridone quinone pigment, a dioxazine pigment, a phthalocyanine pigment, an anthrapyrimidine pigment, an anthanthrone pigment, an indanthrone pigment, a fravanthrone pigment, a pelylene pigment, a diketopyrrolopyrrole pigment, perinone pigment, a quinophthalone pigment, an anthraquinone pigment, a thioindigo pigment, a benzimidazolone pigment, an azo pigment, and the like. These pigments can be used alone or in combination of two or more.

Examples of the dye include azo dyes such as monoazo/disazo and the like; a metal complex dye, a naphthol dye, an anthraquinone dye, an indigo dye, a carbonium dye, a quinoimine dye, a cyanine dye, a quinoline dye, a nitro dye, a nitroso dye, a benzoquinone dye, a naphthoquinone dye, a naphthalimide dye, a perinone dye, a phthalocyanine dye, a triallylmethane-based dye, and the like. These dyes can be used alone or in combination or two or more.

### <Characteristics of curable resin composition for stereolithography>

From the viewpoint of securing a practically effective viscosity range in which the viscosity does not become too high, the content of the urethane resin (A) in the curable resin composition for stereolithography of the present invention is preferably 1% by mass or more and 50% by mass or less and more preferably 3% by mass or more and 50% by mass or less.

### (Cured product)

The cured product of the present invention can be obtained by irradiating the curable resin composition for stereolithography of the present invention with active energy rays.

Example of active energy rays include ionizing radiations such as ultraviolet light, electron beams, α-rays, β-rays, γ-rays, and the like. When ultraviolet light is used as active energy rays, irradiation may be performed in an inert gas atmosphere such as nitrogen gas or the like or in an air atmosphere in efficiently performing curing reaction with ultraviolet light.

In view of practicality and economy, an ultraviolet lamp is generally used as an ultraviolet light source. Examples thereof include a low-pressure mercury lamp, a high-pressure mercury lamp, an ultrahigh-pressure mercury lamp, a xenon lamp, a gallium lamp, a metal halide lamp, light, sunlight, LED, and the like.

The integrated light quantity of active energy rays is not particularly limited, but is preferably 50 to 5,000 mJ/cm² and more preferably 300 to 1,000 mJ/cm². The integrated light quantity within the range described above is preferred because the occurrence of an uncured portion can be prevented or suppressed.

### (Three-dimensional shaped article)

A three-dimensional shaped article of the present invention can be formed by a known optical stereolithography.

Examples of the optical stereolithography include a stereolithography (SLA) system, a digital light processing (DLP) system, and an ink jet system.

The stereolithography (SLA) system is a three-dimensional shaping system in which a tank of a liquid curable resin composition is irradiated at points with active energy rays, such as laser beams, and layers are cured one by one while moving a shaping stage.

The digital light processing (DLP) system is a three-dimensional shaping system in which a tank of a liquid curable resin composition is irradiated in a plane with active energy rays, such as LED, and layers are cured one by one while moving a shaping stage.

The ink jet stereolithography is a method in which microdroplets of a curable resin composition for stereolithography are ejected from nozzles so as to draw a predetermined shaped pattern and then irradiated with ultraviolet light to form a cured thin film.

Among these optical three-dimensional shaping methods, the DLP system is preferred because high-speed shaping with a plane can be performed.

The DLP system three-dimensional shaping method is not particularly limited as long as the method uses a DLP stereolithography system, and because the three-dimensional shaped article has good shaping precision, the shaping conditions required therefor include a stereolithography lamination pitch within a range of 0.01 to 0.2 mm, an irradiation wavelength within a range of 350 to 410 nm, a light strength within a range of 0.5 to 50 mW/cm², and an integrated light quantity per layer within a range of 1 to 100 mJ/cm². In particular, because the shaping precision of the three-dimensional shaped article is more improved, preferably, the stereolithography lamination pitch is within a range of 0.02 to 0.1 mm, the irradiation wavelength is within a range of 380 to 410 nm, the light strength is within a range of 5 to 15 mW/cm², and the integrated light quantity per layer is within a range of 5 to 15 mJ/cm².

The three-dimensional shaped article of the present invention has high elastic modulus and excellent impact resistance, and thus can be preferably used for, for example, an automobile part, an aircraft/space-related part, an electric/electronic part, a home appliance, a building material, an interior, jewelry, a medical material, and the like.

### EXAMPLES

The present invention is described in further detail by giving examples below, but the range of the present invention is not limited to these examples.

The materials used in the examples below are as follows.
· Sumijule N3300: isocyanurate-type hexamethylene diisocyanate represented by formula (a1-1) below
· Duranate 24A-100: biuret-type hexamethylene diisocyanate represented by formula (a1-2) below
· Basonat HA300: allophanate-type hexamethylene diisocyanate represented by formula (a1-3) below
· VESTANAT T1890: isocyanurate-type isophorone diisocyanate represented by formula (a1-4) below
· Isophorone diisocyanate: diisocyanate represented by formula (a1-5) below
· Karenz AOI: 2-acryoyloxyethyl isocyanate represented by formula (a1-6) below
· Placcel FA5: caprolactone 5 mol addition-type 2-hydrxyethyl acrylate represented by formula (a2-1) below, hydroxyl value: 81.8 KOHmg/g, (meth)acryloyl group content (theoretical value): 1.46 mmol/g
· Placcel FA4DT: caprolactone 4 mol addition-type 2-hydrxyethyl acrylate represented by formula (a2-2) below, hydroxyl value: 98.1 KOHmg/g, (meth)acryloyl group content (theoretical value): 1.76 mmol/g
· Placcel FA2D: caprolactone 2 mol addition-type 2-hydrxyethyl acrylate represented by formula (a2-3) below, hydroxyl value: 163.1 KOHmg/g, (meth)acryloyl group content (theoretical value): 2.87 mmol/g
· Placcel FA10L: caprolactone 10 mol addition-type 2-hydrxyethyl acrylate represented by formula (a2-4) below (solid content: 70%), hydroxyl value: 31 KOHmg/g, (meth)acryloyl group content (theoretical value): 0.552 mmol/g
· ACMO: acryloylmorpholine (manufactured by KJ Chemicals Corporation) represented by formula (b1-1) below, Tg: 145°C, number of functional groups: 1
· NIPAM: isopropyl acrylamide (manufactured by KJ Chemicals Corporation) represented by formula (b1-2) below, Tg: 134°C, number of functional groups: 1
· FA-513AS: dicyclopentanyl acrylate (manufactured by Showa Denko Materials Co., Ltd.) represented by formula (b1-3) below, Tg 120°C, number of functional groups: 1
· DMAA: dimethyl acrylamide (manufactured by KJ Chemicals Corporation) represented by formula (b1-4), Tg: 119°C, number of functional groups: 1
· IBXA: isobornyl acrylate (manufactured by Osaka Organic Chemical Industry Ltd.) represented by formula (b1-5) below, Tg: 97°C, number of functional groups: 1
· TBCHA: 4-tertairy butyl cyclohexyl acylate (manufactured by KJ Chemicals Corporation) represented by formula (b1-6) below, Tg: 65°C, number of functional groups: 1
· MIRAMER M210: hydroxypivalic acid neopentyl glycol diacrylate (manufactured by MIWON Co., Ltd.) represented by formula (b2-1) below, Tg: 111°C, number of functional groups: 2
· MIRAMER M262: tricyclodecane dimethanol diacrylate (manufactured by MIWON Co., Ltd.) represented by formula (b2-2) below, Tg: 110°C. number of functional groups: 2
· MIRAMER M222: dipropylene glycol diacrylate (manufactured by MIWON Co., Ltd.) represented by formula (b2-3) below, Tg: 102°C, number of functional groups: 2
· MIRAMER M240: bisphenol A EO-modified diacrylate (manufactured by MIWON Co., Ltd.) represented by formula (b2-3) below, Tg 42°C, number of functional groups: 2

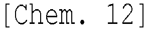

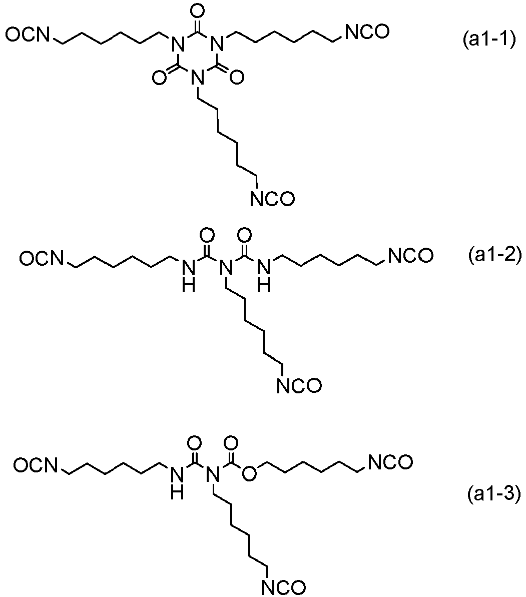

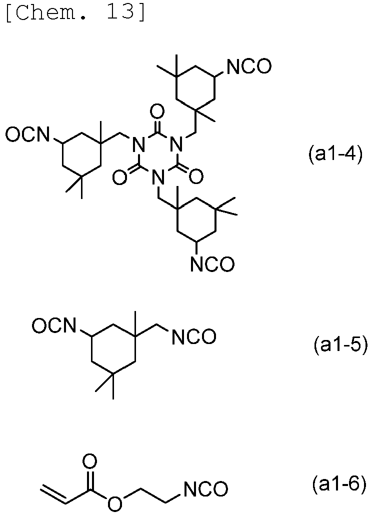

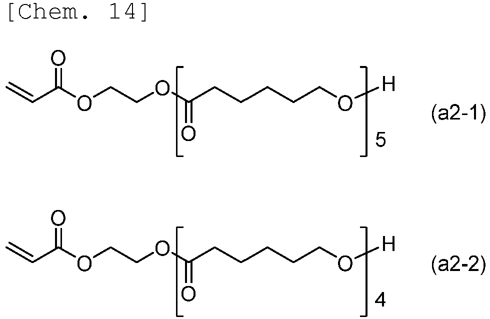

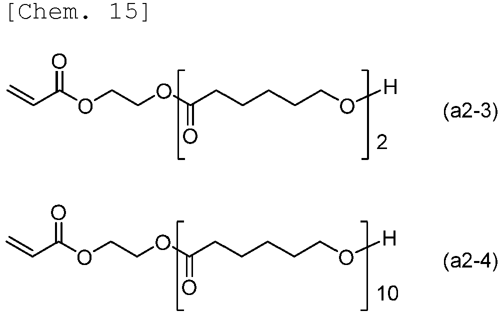

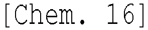

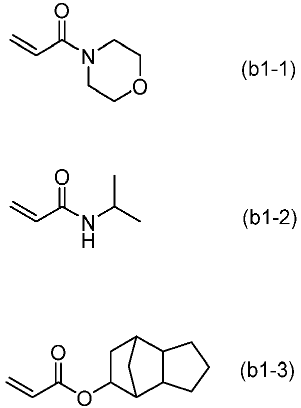

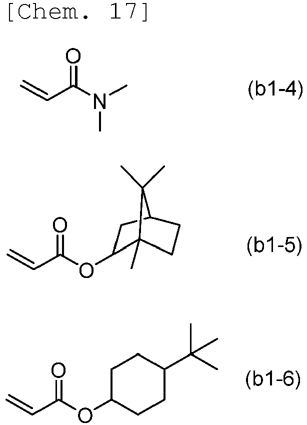

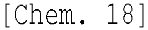

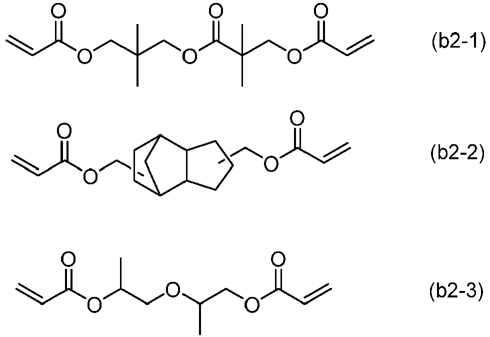

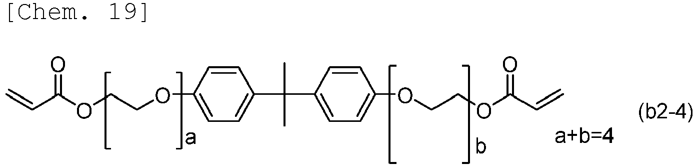

### (SYNTHESIS EXAMPLE 1: Synthesis of urethane (meth)acrylate (A1))

In a 1 L flask provided with a stirrer, a gas inlet tube, a condenser, and a thermometer, Placcel FA5 (234 parts by mass) manufactured by Daicel Corporation, tertiary butyl hydroxytoluene (0.6 parts by mass), methoxyhydroquinone (0.06 parts by mass), and dibutyl tin diacetate (0.06 parts by mass) were added and heated to 70°C, and then Sumidur N3300 (65 parts by mass) manufactured by Sumika Bayer Urethane Co., Ltd. was divided and added over 1 hour. After addition, reaction was performed at 70°C until an infrared absorption spectrum at 2250 cm⁻¹ showing an isocyanate group disappeared, producing urethane (meth)acrylate (A1).

The content of (meth)acryloyl group per g of the urethane (meth)acrylate (A1) calculated from the acryloyl group content (theoretical value) of the raw material was 1.14 mmol (described in Table 1 below, and the content of (meth)acryloyl group in each of the urethane (meth)acrylates produced in Synthesis Examples below is also described in Table 1).

### (SYNTHESIS EXAMPLE 2: Synthesis of urethane (meth)acrylate (A2))

In a 1 L flask provided with a stirrer, a gas inlet tube, a condenser, and a thermometer, Placcel FA4DT (224 parts by mass) manufactured by Daicel Corporation, tertiary butyl hydroxytoluene (0.6 parts by mass), methoxyhydroquinone (0.06 parts by mass), and dibutyl tin diacetate (0.06 parts by mass) were added and heated to 70°C, and then Sumidur N3300 (75 parts by mass) manufactured by Sumika Bayer Urethane Co., Ltd. was divided and added over 1 hour. After addition, reaction was performed at 70°C until an infrared absorption spectrum at 2250 cm⁻¹ showing an isocyanate group disappeared, producing urethane (meth)acrylate (A2).

### (SYNTHESIS EXAMPLE 3: Synthesis of urethane (meth)acrylate (A3))

In a 1 L flask provided with a stirrer, a gas inlet tube, a condenser, and a thermometer, Placcel FA2D (192 parts by mass) manufactured by Daicel Corporation, tertiary butyl hydroxytoluene (0.6 parts by mass), methoxyhydroquinone (0.06 parts by mass), and dibutyl tin diacetate (0.06 parts by mass) were added and heated to 70°C, and then Sumidur N3300 (107 parts by mass) manufactured by Sumika Bayer Urethane Co., Ltd. was divided and added over 1 hour. After addition, reaction was performed at 70°C until an infrared absorption spectrum at 2250 cm⁻¹ showing an isocyanate group disappeared, producing urethane (meth)acrylate (A3).

### (SYNTHESIS EXAMPLE 4: Synthesis of urethane (meth)acrylate (A4))

In a 1 L flask provided with a stirrer, a gas inlet tube, a condenser, and a thermometer, Placcel FA4DT (155 parts by mass) manufactured by Daicel Corporation, tertiary butyl hydroxytoluene (0.4 parts by mass), methoxyhydroquinone (0.04 parts by mass), and dibutyl tin diacetate (0.04 parts by mass) were added and heated to 70°C, and then Duranate 24A-100 (48 parts by mass) manufactured by Asahi Kasei Corporation was divided and added over 1 hour. After addition, reaction was performed at 70°C until an infrared absorption spectrum at 2250 cm⁻¹ showing an isocyanate group disappeared, producing urethane (meth)acrylate (A4).

### (SYNTHESIS EXAMPLE 5: Synthesis of urethane (meth)acrylate (A5))

In a 1 L flask provided with a stirrer, a gas inlet tube, a condenser, and a thermometer, Placcel FA4DT (215 parts by mass) manufactured by Daicel Corporation, tertiary butyl hydroxytoluene (0.6 parts by mass), methoxyhydroquinone (0.06 parts by mass), and dibutyl tin diacetate (0.06 parts by mass) were added and heated to 70°C, and then Basonat HA300 (84 parts by mass) manufactured by BASF Ltd. was divided and added over 1 hour. After addition, reaction was performed at 70°C until an infrared absorption spectrum at 2250 cm⁻¹ showing an isocyanate group disappeared, producing urethane (meth)acrylate (A5).

### (SYNTHESIS EXAMPLE 6: Synthesis of urethane (meth)acrylate (A6))

In a 1 L flask provided with a stirrer, a gas inlet tube, a condenser, and a thermometer, Placcel FA4DT (211 parts by mass) manufactured by Daicel Corporation, tertiary butyl hydroxytoluene (0.6 parts by mass), methoxyhydroquinone (0.06 parts by mass), and dibutyl tin diacetate (0.06 parts by mass) were added and heated to 70°C, and then VESTANAT T1890 (89 parts by mass) manufactured by Evonik Industries Ltd. was divided and added over 1 hour. After addition, reaction was performed at 70°C until an infrared absorption spectrum at 2250 cm⁻¹ showing an isocyanate group disappeared, producing urethane (meth)acrylate (A6).

### (SYNTHESIS EXAMPLE 7: Synthesis of urethane (meth)acrylate (A7))

In a 1 L flask provided with a stirrer, a gas inlet tube, a condenser, and a thermometer, Placcel FA5 (258 parts by mass) manufactured by Daicel Corporation, tertiary butyl hydroxytoluene (0.6 parts by mass), methoxyhydroquinone (0.06 parts by mass), and dibutyl tin diacetate (0.06 parts by mass) were added and heated to 70°C, and then isophorone diisocyanate (41 parts by mass) was divided and added over 1 hour. After addition, reaction was performed at 70°C until an infrared absorption spectrum at 2250 cm⁻¹ showing an isocyanate group disappeared, producing urethane (meth)acrylate (A7).

### (SYNTHESIS EXAMPLE 8: Synthesis of urethane (meth)acrylate (A8))

In a 1 L flask provided with a stirrer, a gas inlet tube, a condenser, and a thermometer, Placcel FA5 (249 parts by mass) manufactured by Daicel Corporation, tertiary butyl hydroxytoluene (0.6 parts by mass), methoxyhydroquinone (0.06 parts by mass), and dibutyl tin diacetate (0.06 parts by mass) were added and heated to 70°C, and then Karenz AOI (50 parts by mass) manufactured by Showa Denko K. K. was divided and added over 1 hour. After addition, reaction was performed at 70°C until an infrared absorption spectrum at 2250 cm⁻¹ showing an isocyanate group disappeared, producing urethane (meth)acrylate (A8).

### (SYNTHESIS EXAMPLE 9: Synthesis of urethane (meth)acrylate (A9))

In a 2 L flask provided with a stirrer, a gas inlet tube, a condenser, and a thermometer, isophorone diisocyanate (132 parts by mass), tertiary butyl hydroxytoluene (1.6 parts by mass), methoxyhydroquinone (0.2 parts by mass), and dibutyl tin diacetate (0.2 parts by mass) were added and heated to 70°C, and then polypropylene glycol (number-average molecular weight: 2000) (596 parts by mass) was divided and added over 1 hour. After addition, reaction was performed for 3 hours at 70°C, and then Placcel FA4DT (340 parts by mass) manufactured by Daicel Corporation was added over 1 hour. After the addition, reaction was performed at 70°C until an infrared absorption spectrum at 2250 cm⁻¹ showing an isocyanate group disappeared, producing urethane resin (A-9) having an acryloyl group.

### (SYNTHESIS EXAMPLE 10: Synthesis of urethane (meth)acrylate (A10))

In a 1 L flask provided with a stirrer, a gas inlet tube, a condenser, and a thermometer, Placcel FA10L (371 parts by mass) manufactured by Daicel Corporation, tertiary butyl hydroxytoluene (0.6 parts by mass), methoxyhydroquinone (0.06 parts by mass), and dibutyl tin diacetate (0.06 parts by mass) were added and heated to 70°C, and then Sumidur N3300 (40 parts by mass) manufactured by Sumika Bayer Urethane Co., Ltd. was divided and added over 1 hour. After addition, reaction was performed at 70°C until an infrared absorption spectrum at 2250 cm⁻¹ showing an isocyanate group disappeared, and the solvent was distilled off under reduced pressure, producing urethane (meth)acrylate (A10).

### (EXAMPLE 1: Preparation of curable resin composition (1))

In a four-neck flask provided with a stirrer, a thermometer, and a condenser, 30 parts by mass of the urethane (meth)acrylate (A1) produced in Synthesis Example 1, 70 parts by mass of ACMO manufacture by KJ Chemicals Corporation, 2 parts by mass of Omnirad TPO manufactured by IGM Resins Inc. were added and stirred at 60°C or less until the materials were uniformly dissolved, preparing a curable resin composition (1).

### (EXAMPLES 2 to 23: Preparation of curable resin compositions (2) to (23))

Curable resin compositions (2) to (23) were prepared by the same method as in Example 1 except that in Example 1, the compositions and mixing amounts of urethane (meth)acrylate and (meth)acrylic compound were changed as shown in Table 1 or Table 2.

### (COMPARATIVE EXAMPLES 1 to 3: Preparation of curable resin compositions (C1) to (C3)))

Curable resin compositions (C1) to (C3) were prepared by the same method as in Example 1 except that in Examples 1, the compositions and mixing amounts of urethane (meth)acrylate and (meth)acrylic compound were changed as shown in Table 3.

Evaluation was performed as described below by using the curable resin compositions prepared in Examples 1 to 23 and Comparative Examples 1 to 3.

### [Measurement of viscosity]

The viscosity at 25°C of each of the curable resin compositions prepared in Examples and Comparative Examples was measured by using an E-type viscometer ("TV-22" manufactured by Tokisangyo Co., Ltd.).

### [Formation of test piece]

A tensile test dumbbell and test piece for Izod impact test (according to ASTM D256) were formed by using a stereolithography 3D printer ("Vittro P100" manufactured by 3D' LIGHT Co., Ltd.). The tensile test dumbbell was formed in a shape similar to ASTM D638 TYPE 1 having a total length size of 55 mm. Next, the tensile test dumbbell and test piece for Izod impact test formed by stereolithography were washed with isopropyl alcohol, dried at room temperature for 1 hour. Then, both surfaces of each of the test pieces were irradiated as post-curing for 10 minutes each with LED at a wavelength of 385 nm using "Multicure 180" manufactured by XYZ Printing Co. Ltd., producing test piece 1 (tensile test dumbbell) and test piece 2 (test piece for Izod impact test).

### [Method for measuring elastic modulus]

The elastic modulus was measured by tensile test using universal testing machine "5965" manufactured by INSTRON Co., Ltd. In the test, measurement was performed under the conditions including a load cell of 1 kN, a tensile speed of 1 mm/min, and a distance between tensile jigs of 38 mm.

### [Method for measuring Izod impact strength (impact resistance)]

The Izod impact strength was measured by using the test piece 2, "Izod Impact Tester" manufactured by Toyo Seiki Seisaku-Sho Ltd., and a hammer of 2.75 J according to ASTM D256. The test was performed each of 1 week and 3 weeks after from the formation of the test piece 2, and a rate of change with time was also calculated. In addition, the test piece 2 was stored in an environment at a room temperature of 25°C and a humidity of 50% during the period to the test after the formation of the test piece 2.

The compositions and the evaluation results of the curable resin compositions produced in Examples 1 to 23 and Comparative Examples 1 to 3 are shown in Table 1 to Table 3 below.

**[Table 1]**

| | | | | Example 1 | Example 2 | Example 3 | Example 4 | Example 5 | Example 6 | Example 7 | Example 8 | Example 9 |
|---|---|---|---|---|---|---|---|---|---|---|---|---|
| | | (Meth)acryloyl group content [mmol/g] | Curable resin composition | (1) | (2) | (3) | (4) | (5) | (6) | (7) | (8) | (9) |
| Urethane (meth)acrylate (A) | A1 | 1.14 | | 30 | | | | | | | | |
| | A2 | 1.31 | | | 30 | 30 | 40 | | | | | |
| | A3 | 1.86 | | | | | | 30 | | | | |
| | A4 | 1.33 | | | | | | | 30 | | | |
| | A5 | 1.26 | | | | | | | | 30 | | |
| | A6 | 1.23 | | | | | | | | | 30 | |
| | A7 | 1.245 | | | | | | | | | | 30 |
| | A8 | 2.4 | | | | | | | | | | |
| | A9 | 0.73 | | | | | | | | | | |
| | A10 | 0.69 | | | | | | | | | | |
| Monofunctional (meth)acrylic compound (B1) | ACMO | | Composition (parts by mass) | 70 | 70 | 30 | | 30 | 30 | 30 | 30 | 30 |
| | NIPAM | | | | | | | | | | | |
| | FA-513AS | | | | | | | | | | | |
| | DMAA | | | | | | | | | | | |
| | IBXA | | | | | | | | | | | |
| | TBCHA | | | | | | | | | | | |
| Difunctional (meth)acrylic compound (B2) | MIRAMER M210 | | | | | 40 | 60 | 40 | 40 | 40 | 40 | 40 |
| | MIRAMER M262 | | | | | | | | | | | |
| | MIRAMER M222 | | | | | | | | | | | |
| | MIRAMER M240 | | | | | | | | | | | |
| Photopolymerization initiator | Omnirad TPO | | | 2 | 2 | 2 | 2 | 2 | 2 | 2 | 2 | 2 |
| | | Total | | 102 | 102 | 102 | 102 | 102 | 102 | 102 | 102 | 102 |
| Evaluation result | Viscosity [mPa·s] | | | 147 | 210 | 170 | 420 | 170 | 163 | 181 | 176 | 116 |
| | Elastic modulus [×10⁹Pa] | | | 1.405 | 1.311 | 1.619 | 1.200 | 2.468 | 1.365 | 1.294 | 2.008 | 1.765 |
| | Izod impact strength [J/m] (1w after) | | | 56.4 | 93.0 | 61.6 | 57.6 | 37.7 | 69.8 | 58.1 | 23.5 | 31.2 |
| | Izod impact strength [J/m] (3w after) | | | 52.2 | 86.0 | 51.9 | 73.7 | 29.0 | 59.1 | 52.9 | 28.0 | 19.5 |
| | Izod impact strength rate of change with time (%) | | | -7 | -8 | -16 | 28 | -23 | -15 | -9 | 19 | -38 |

**[Table 2]**

| | | | | Example 10 | Example 11 | Example 12 | Example 13 | Example 14 | Example 15 | Example 16 | Example 17 | Example 18 |
|---|---|---|---|---|---|---|---|---|---|---|---|---|
| | | (Meth)acryloyl group content [mmol/g] | Curable resin composition | (10) | (11) | (12) | (13) | (14) | (15) | (16) | (17) | (18) |
| Urethane (meth)acrylate (A) | A1 | 1.14 | | | | | | | | | | |
| | A2 | 1.31 | | 15 | 40 | | 30 | 30 | 30 | 30 | 30 | 40 |
| | A3 | 1.86 | | | | 40 | | | | | | |
| | A4 | 1.33 | | | | | | | | | | |
| | A5 | 1.26 | | | | | | | | | | |
| | A6 | 1.23 | | | | | | | | | | |
| | A7 | 1.245 | | | | | | | | | | |
| | A8 | 2.4 | | | | | | | | | | |
| | A9 | 0.73 | | | | | | | | | | |
| | A10 | 0.69 | | | | | | | | | | |
| Monofunctional (meth)acrylic compound (B1) | ACMO | | Composition (parts by mass) | 30 | 30 | 30 | | | | | | 30 |
| | NIPAM | | | | | | 30 | | | | | |
| | FA-513AS | | | | | | | 30 | | | | |
| | DMAA | | | | | | | | 30 | | | |
| | IBXA | | | | | | | | | 50 | | |
| | TBCHA | | | | | | | | | | 30 | |
| Difunctional (meth)acrylic compound (B2) | MIRAMER M210 | | | | 30 | 30 | | | | | | |
| | MIRAMER M262 | | | 55 | | | 40 | 40 | 40 | | 40 | 30 |
| | MIRAMER M222 | | | | | | | | | 20 | | |
| | MIRAMER M240 | | | | | | | | | | | |
| Photopolymerization initiator | Omnirad TPO | | | 2 | 2 | 2 | 2 | 2 | 2 | 2 | 2 | 2 |
| | | Total | | 102 | 102 | 102 | 102 | 102 | 102 | 102 | 102 | 102 |
| Evaluation result | Viscosity [mPa·s] | | | 150 | 298 | 423 | 905 | 632 | 610 | 151 | 598 | 501 |
| | Elastic modulus [×10⁹Pa] | | | 2.653 | 1.095 | 1.989 | 1.506 | 1.481 | 1.288 | 1.492 | 1.035 | 1.516 |
| | Izod impact strength [J/m] (1w after) | | | 46.2 | 90.4 | 64.3 | 58.0 | 49.0 | 62.0 | 51.0 | 55.0 | 54.3 |
| | Izod impact strength [J/m] (3w after) | | | 30.8 | 82.3 | 41.5 | 53.6 | 38.6 | 65.0 | 50.4 | 49.0 | 61.4 |
| | Izod impact strength rate of change with time (%) | | | -33 | -9 | -35 | -8 | -21 | 5 | -1 | -11 | 13 |

**[Table 3]**

| | | | | Example 19 | Example 20 | Example 21 | Example 22 | Example 23 | Comparative Example 1 | Comparative Example 2 | Comparative Example 3 |
|---|---|---|---|---|---|---|---|---|---|---|---|
| | | (Meth)acryloyl group content [mmol/g] | Curable resin composition | (19) | (20) | (21) | (22) | (23) | (C1) | (C2) | (C3) |
| Urethane (meth)acrylate (A) | A1 | 1.14 | | | | | | | | | |
| | A2 | 1.31 | | 40 | 40 | 50 | 60 | | | | |
| | A3 | 1.86 | | | | | | 50 | | | |
| | A4 | 1.33 | | | | | | | | | |
| | A5 | 1.26 | | | | | | | | | |
| | A6 | 1.23 | | | | | | | | | |
| | A7 | 1.245 | | | | | | | | | |
| | A8 | 2.4 | | | | | | | 30 | | |
| | A9 | 0.73 | | | | | | | | 30 | |
| | A10 | 0.69 | | | | | | | | | 15 |
| Monofunctional (meth)acrylic compound (B1) | ACMO | | Composition (parts by mass) | 30 | 30 | 30 | 30 | 20 | 70 | 30 | 30 |
| | NIPAM | | | | | | | | | | |
| | FA-513AS | | | | | | | | | | |
| | DMAA | | | | | | | | | | |
| | IBXA | | | | | | | | | | |
| | TBCHA | | | | | | | | | | |
| Difunctional (meth)acrylic compound (B2) | MIRAMER M210 | | | | | 20 | 10 | 30 | | 40 | |
| | MIRAMER M262 | | | | | | | | | | 55 |
| | MIRAMER M222 | | | 30 | | | | | | | |
| | MIRAMER M240 | | | | 30 | | | | | | |
| Photopolymerization initiator | Omnirad TPO | | | 2 | 2 | 2 | 2 | 2 | 2 | 2 | 2 |
| | | Total | | 102 | 102 | 102 | 102 | 102 | 102 | 102 | 102 |
| Evaluation result | Viscosity [mPa·s] | | | 224 | 868 | 582 | 1098 | 847 | 70 | 220 | 145 |
| | Elastic modulus [×10⁹Pa] | | | 0.843 | 0.723 | 0.875 | 0.504 | 1.455 | 1.105 | 1.131 | 0.994 |
| | Izod impact strength [J/m] (1w after) | | | 75.2 | 88.0 | 150.1 | 220.0 | 51.7 | 53.9 | 11.1 | 22.0 |
| | Izod impact strength [J/m] (3w after) | | | 70.2 | 76.0 | 139.0 | 195.0 | 48.6 | 25.3 | 8.5 | 15.0 |
| | Izod impact strength rate of change with time (%) | | | -7 | -14 | -7 | -11 | -6 | -53 | -23 | -32 |

From the viewpoint of shaping properties and the load to a shaping machine, the viscosity of the curable resin composition is 1,100 mPa·s or less and preferably 1,000 mPa·s or less. In addition, the elastic modulus of the shaped article in the tensile test is required to be 0.5 × 10⁹ Pa or more in terms of strength, and the higher the better. From the viewpoint of impact resistance, the Izod impact strength is 18 J/m or more, preferably 20 J/m or more, and more preferably 30 J/m or more. Further, in anticipation of long-term use, the rate of change in Izod impact strength with time is less than 50%, and the smaller the better.

It can be confirmed from the results shown in the tables that the curable resin composition of the present invention has low viscosity. Also, it can be confirmed that the curable resin composition of the present invention can form a cured product having excellent elastic modulus. Further, it can be confirmed that the curable resin composition of the present invention can form a cured product having high impact strength and a small change with time, and excellent impact resistance in the Izod impact strength test. The curable resin composition of the present invention can be effectively used for stereolithography.

## Claims

1. A curable resin composition for stereolithography, comprising a urethane resin (A) having a (meth)acryloyl group and a photopolymerization initiator,
wherein the content of (meth)acryloyl group in the urethane resin (A) is 0.8 mmol/g or more and 2.2 mmol/g or less.

2. The curable resin composition for stereolithography according to Claim 1, wherein the urethane resin (A) is produced by using, as essential reaction raw materials, at least one polyisocyanate (a1) represented by any one of formulae (1), (2), and (3) below, and a compound (a2) having a hydroxyl group and a (meth)acryloyl group, 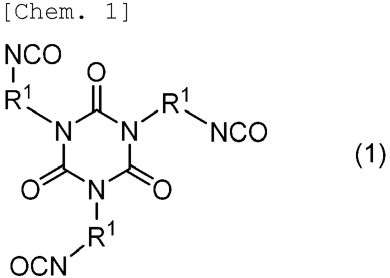 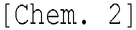 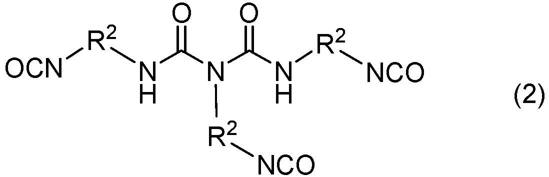 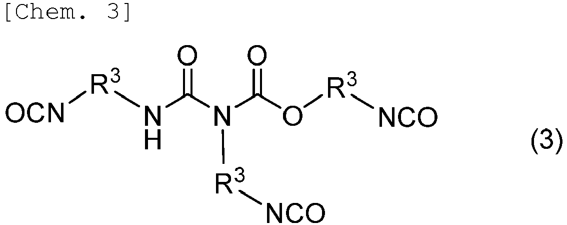 (in the formulae (1), (2), and (3), R¹, R², and R³ each represent a hydrocarbon group having 1 to 20 carbon atoms, which may have a substituent).

3. The curable resin composition for stereolithography according to Claim 2, wherein R¹, R², and R³ in the formulae (1), (2), and (3) each represent a linear alkyl group.

4. The curable resin composition for stereolithography according to Claim 2 or 3, wherein the urethane resin (A) is produced by using, as essential reaction raw materials, at least one polyisocyanate (a1) represented by any one of the formulae (1), (2), and (3), and a compound (a2) represented by formula (4) below having a hydroxyl group and a (meth)acryloyl group, 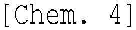 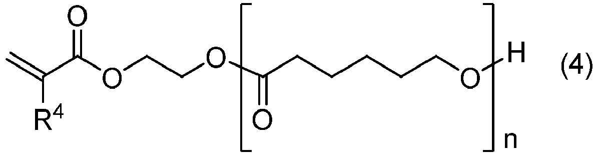 (in the formula (4), R⁴ represents a hydrogen atom or a methyl group, and n represents an integer of 0 or more and 10 or less) .

5. The curable resin composition for stereolithography according to any one of Claims 1 to 4, comprising a monofunctional (meth)acrylic compound (B1) and/or a difunctional (meth)acrylic compound (B2),
wherein the content of the urethane resin (A) in the curable resin composition for stereolithography is 1% by mass or more and 50% by mass or less.

6. The curable resin composition for stereolithography according to Claim 5, wherein the glass transition temperature of a polymer of the monofunctional (meth)acrylic compound (B1) is 50°C or more.

7. The curable resin composition for stereolithography according to Claim 5, wherein the glass transition temperature of a polymer of the difunctional (meth)acrylic compound (B2) is 40°C or more.

8. The curable resin composition for stereolithography according to Claim 5 or 6, wherein the monofunctional (meth)acrylic compound (B1) is represented by formula (5) below, 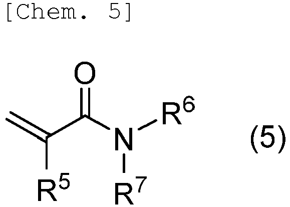 (in the formula (5), R⁵ represents a hydrogen atom or a methyl group, R⁶ and R⁷ are each independently a monovalent hydrocarbon group having 1 to 40 carbon atoms which may have a ring structure, a group in which the carbon atoms in the hydrocarbon group are partially substituted by oxygen atoms or nitrogen atoms, or a hydrogen atom, R⁶ and R⁷ may be bonded to each other to from a ring, and a monovalent hydrocarbon group having 1 to 40 carbon atoms represented by each of R⁶ and R⁷ may or may not contain an unsaturated double bond).

9. A cured product comprising a curing reaction product of the curable resin composition for stereolithography according to any one of Claims 1 to 8.

10. The cured product according to Claim 9, wherein a curing condition is irradiation with active energy rays.

11. A three-dimensional shaped article comprising the cured product according to Claim 9 or 10.
